# EUROPÄISCHE PATENTSCHRIFT

(11) **EP 4 466 165 B1**
(45) Veröffentlichungstag und Bekanntmachung des Hinweises auf die Patenterteilung: **04.02.2026**
(21) Anmeldenummer: 22839287.4
(22) Anmeldetag: 16.12.2022
(51) Int. Cl.: B60R 22/34

(54) **GURTAUFROLLER FÜR EINE SICHERHEITSGURTEINRICHTUNG EINES KRAFTFAHRZEUGES**
BELT RETRACTOR FOR A SEATBELT DEVICE OF A MOTOR VEHICLE
ENROULEUR DE CEINTURE POUR UN DISPOSITIF DE CEINTURE DE SÉCURITÉ D'UN VÉHICULE AUTOMOBILE

(30) Priorität: 19.01.2022 DE 102022101203
(43) Veröffentlichungstag der Anmeldung: 27.11.2024
(73) Patentinhaber: Autoliv Development AB, 447 83 Vårgårda (SE)
(72) Erfinder: DAHLQUIST, Bengt, 44156 Alingsas (SE); PETTERSSON, Lennart, 44737 Vargarda (SE)
(74) Vertreter: Müller Verweyen
(86) Internationale Anmeldenummer: PCT/EP2022/086270
(87) Internationale Veröffentlichungsnummer: WO 2023/138853

(56) Entgegenhaltungen:
- WO-A1-2017/207695
- DE-U1- 20 208 320
- KR-U- 19990 034 285

## Beschreibung

Die vorliegende Erfindung betrifft einen Gurtaufroller für eine Sicherheitsgurteinrichtung eines Kraftfahrzeuges mit den Merkmalen des Oberbegriffs von Anspruch 1.

Gurtaufroller von Sicherheitsgurteinrichtungen in Kraftfahrzeugen sind fahrzeugfest befestigt und weisen eine drehbar gelagerte Gurtwelle auf, auf welcher ein Sicherheitsgurt der Sicherheitsgurteinrichtung aufwickelbar wird. Die Gurtwelle ist in einem fahrzeugfest befestigbaren Rahmen drehbar gelagert, welcher gleichzeitig zu einer fahrzeugfesten Befestigung des Gurtaufrollers an der Fahrzeugstruktur oder an einem Fahrzeugsitz dient. Ferner ist eine sich an dem Rahmen des Gurtaufrollers abstützende Rückzugsfeder vorgesehen, welche die Gurtwelle in Aufwickelrichtung des Sicherheitsgurtes federbelastet, so dass der Sicherheitsgurt unter einem Spannen der Rückzugsfeder ausgezogen werden kann und anschließend nach dem Ausziehen durch einen Antrieb der Gurtwelle in Aufwickelrichtung von der gespannten Rückzugsfeder wieder eingezogen wird. Es hat sich bewährt, die Rückzugsfeder durch eine in einem Federgehäuse angeordnete Spiralfeder auszubilden, wobei das Federgehäuse drehfest an dem Rahmen des Gurtaufrollers befestigt ist und außerdem zur Befestigung des äußeren Endes der Spiralfeder dient. Das innere Ende der Spiralfeder, welches auch als Federherz bezeichnet wird, ist mit der Gurtwelle drehfest verbunden. Ferner ist die Spiralfeder so gewickelt, dass sie die Gurtwelle über das Federherz in Aufwickelrichtung vorspannt und sich dabei mit dem äußeren Ende über das Federgehäuse an dem Rahmen fahrzeugfest abstützt. Die Rückzugsfeder wird in dem Federgehäuse vormontiert und fixiert und zusammen mit diesem als vormontierte Baugruppe, welche auch als Federkassette bezeichnet wird, an dem Gurtaufroller montiert.

Der Rahmen weist zwei gegenüberliegende, jeweils in parallel zueinander ausgerichteten Schenkeln des Rahmens angeordnete Lageröffnungen auf, in denen die Gurtwelle jeweils mit einem Lagerflansch in Radialrichtung gelagert ist. Die Federkassette wird bei der Montage seitlich mit dem Federherz auf einen zentralen axialen Fortsatz der Gurtwelle aufgesetzt und drehfest verbunden und über das Federgehäuse an einem der Schenkel des Rahmens befestigt. Die Federkassette ist dabei so ausgelegt, dass der Fortsatz der Gurtwelle mit einem Lagerspiel von +/- 1 mm in Axialrichtung mit dem Federherz verbunden werden kann.

Aus der DE 27 20 959 ist ein Gurtaufroller bekannt, bei dem die Gurtwelle zusätzlich über den axialen Fortsatz, an dem das Federherz gehalten ist, in einer Punktlagerung in dem Federgehäuse gelagert ist.

Aus der DE 10 2004 008 278 A1 ist ferner ein Gurtaufroller bekannt, bei dem das Federherz in der Federkassette zur Vereinfachung der Montage mittels einer Ablaufsperre fixiert ist, welche dann bei der Verbindung des Federherzes mit dem axialen Fortsatz der Gurtwelle entfernt oder zerstört wird.

Aus der DE 31 08 632 A1 ist ferner ein Gurtaufroller bekannt, bei dem die Federkassette über mehrere an dem Federgehäuse vorgesehene Spreizzapfen an dem Schenkel des Rahmens fixiert ist.

Ein weitere Gurtaufroller ist z.B. aus der Druckschrift WO 2017/207695 A1 bekannt.

Ein Grundproblem ist es, dass die als Spiralfeder ausgebildete Rückzugsfeder nicht nur Kräfte in Umfangsrichtung auf die Gurtwelle ausübt. Die Rückzugsfeder übt aufgrund ihrer Formgebung und der radial äußeren Befestigung an dem Federgehäuse in Verbindung mit der radial inneren Befestigung an der Gurtwelle zusätzlich auch Radialkräfte auf die Gurtwelle und das Federgehäuse aus. Diese Radialkräfte müssen zusätzlich von der Lagerung der Gurtwelle aufgenommen werden und können den Auf- und Abwickelvorgang des Sicherheitsgurtes z.B. durch eine erhöhte Reibung in der Lagerung der Gurtwelle nachteilig beeinflussen.

Vor diesem Hintergrund liegt der Erfindung die Aufgabe zugrunde einen Gurtaufroller bereitzustellen, welcher hinsichtlich des Auf- und Abwickelvorganges des Sicherheitsgurtes verbessert sein soll.

Zur Lösung der Aufgabe wird ein Gurtaufroller mit den Merkmalen von Anspruch 1 vorgeschlagen. Weitere bevorzugte Weiterentwicklungen der Erfindung sind den Unteransprüchen, den Figuren und der zugehörigen Beschreibung zu entnehmen.

Nach Anspruch 1 wird zur Lösung der Aufgabe ein Gurtaufroller für eine Sicherheitsgurteinrichtung eines Kraftfahrzeuges mit einer drehbar in einem Rahmen gelagerten Gurtwelle zum Aufwickeln eines Sicherheitsgurtes der Sicherheitsgurteinrichtung vorgeschlagen, wobei der Rahmen zwei gegenüberliegende parallel zueinander ausgerichtete Wandabschnitte mit jeweils einer Lageröffnung aufweist, in denen die Gurtwelle drehbar gelagert ist, und einem an einem der Wandabschnitte befestigten Federgehäuse mit einer darin angeordneten Rückzugsfeder, welche mit einem ersten Ende mit dem Federgehäuse und einem zweiten Ende drehfest mit der Gurtwelle verbunden ist, wobei das Federgehäuse radial elastisch an dem Wandabschnitt gehalten ist, und das Federgehäuse ein Grundgehäuse mit radial außen angeordneten Befestigungsabschnitten aufweist, und die Befestigungsabschnitte über elastische Verformungsabschnitte mit dem Grundgehäuse verbunden sind.

Durch die radial elastische Halterung des Federgehäuses an dem Rahmen bzw. dem Wandabschnitt des Rahmens des Gurtaufrollers kann das Federgehäuse und damit auch das daran gehaltene erste Ende der Rückzugsfeder zumindest geringfügige Radialbewegungen ausführen, so dass im Umkehrschluss die auf die Gurtwelle einwirkenden Radialkräfte reduziert werden können. Insbesondere können dadurch die von der Rückzugsfeder selbst ausgeübten Radialkräfte kompensiert werden, die Rückzugsfeder gibt praktisch selbst nach, indem das erste Ende radial nach außen oder innen ausweichen kann.

Ferner ist die Befestigung des Federgehäuses einerseits bewusst fest und andererseits bewusst radial elastisch ausgelegt, indem die Befestigung über die Befestigungsabschnitte entsprechend fest erfolgt und die radial elastische Bewegbarkeit des Federgehäuses durch die bewusst zwischen dem Grundgehäuse und den Befestigungsabschnitten vorgesehenen Verformungsabschnitte erreicht wird. Dabei wird die radial elastische Bewegbarkeit des Federgehäuses gezielt durch die Auslegung und Anordnung der Verformungsabschnitte erreicht, während die Befestigungsabschnitte hinsichtlich einer funktionssicheren entsprechend festen Befestigung des Federgehäuses ausgelegt werden können.

Weiter wird vorgeschlagen, dass die Befestigungsabschnitte jeweils über zwei Verformungsabschnitte mit dem Grundgehäuse verbunden sind, und die Befestigungsabschnitte jeweils zusammen mit den daran vorgesehenen Verformungsabschnitten jeweils einen Freiraum zu dem Grundgehäuse begrenzen. Der Vorteil dieser Lösung ist darin zu sehen, dass das Grundgehäuse auch bei einem Schaden an einem der Verformungsabschnitte immer noch über den jeweils anderen Verformungsabschnitt funktionssicher mit dem Befestigungsabschnitt verbunden ist. Ferner ergänzen sich die Verformungsabschnitte und der Befestigungsabschnitte so zueinander, dass sie einen Freiraum zu dem Grundgehäuse begrenzen, die Verformungsabschnitte bilden damit zusammen mit dem dazwischen angeordneten Befestigungsabschnitt eine durchgehende Verbindungslinie, und die Beweglichkeit wird durch den zu dem Grundgehäuse gebildeten Freiraum und die Verformbarkeit der Verformungsabschnitte erzielt.

Weiter wird vorgeschlagen, dass vier Befestigungsabschnitte vorgesehen sind, und jeweils zwei Befestigungsabschnitte in Bezug zu einer Mittenachse des Gurtaufrollers symmetrisch zueinander angeordnet sind. Durch die vorgeschlagene Anzahl und Anordnung der Befestigungsabschnitte kann ein möglichst gleichmäßiger und in Bezug zu der Mittenachse richtungsneutraler Ausgleich der Radialkräfte durch eine entsprechende Ausweichbewegung des Federgehäuses realisiert werden.

Weiter wird vorgeschlagen, dass die Befestigungsabschnitte derart angeordnet sind, dass sie jeweils einen Anschlag bilden, durch welchen die durch die Verformungsabschnitte ermöglichte radiale Auslenkung des Federgehäuses begrenzt wird. Die radiale elastische Befestigung des Federgehäuses wird damit auf einen maximalen Federweg beschränkt. Dabei ist der elastische Federweg des Federgehäuse bevorzugt so bemessen, dass er größer als das Lagerspiel der Gurtwelle in den Lageröffnungen ist, so dass die von dem Sicherheitsgurt auf die Gurtwelle ausgeübten Radialkräfte zu einem Anlaufen der Gurtwelle in ihren Lagerstellen führt und die Befestigungsabschnitte in diesem Fall nicht belastet werden, da das Federgehäuse in diesem Fall nicht zum Anschlag an die Befestigungsabschnitte gelangt.

Weiter wird vorgeschlagen, dass das Federgehäuse an seiner dem Wandabschnitt zugewandten Seite eine mit dem Federgehäuse fest verbundene Abdeckung aufweist, und die Abdeckung einen ringförmigen axial vorstehenden Kragen aufweist, welcher derart angeordnet ist, dass er in die Lageröffnungen eingreift und den die Lageröffnung durchgreifenden Abschnitt der Gurtwelle umfasst. Der axial vorstehende Kragen bildet in diesem Fall zusätzlich einen Lagerring mit einer vergrößerten Lagerfläche in der Lageröffnung für die Gurtwelle aus. Damit können zusätzliche Lagerschalen oder Lagerringe in der Lageröffnung entfallen.

Weiter wird vorgeschlagen, dass der Wandabschnitt im Bereich der Lageröffnung in Axialrichtung der Gurtwelle verdickt ist. Durch die vorgeschlagene Weiterbildung bildet der Wandabschnitt selbst eine vergrößerte Anlage- oder Anlauffläche für die Gurtwelle oder einen Lagerring aus.

Ferner wird vorgeschlagen, dass die Rückzugsfeder mit dem zweiten Ende mit einem Kupplungsstück drehfest verbunden ist, welches drehfest mit der Gurtwelle verbunden ist. Das Kupplungsstück dient der Verbindung mit der Gurtwelle und ist hierzu individuell z.B. mit einem Vielzahn- oder Polygonprofil versehen, während die Rückzugsfeder mit dem zweiten Ende fest an dem Kupplungsstück befestigt oder eingespannt ist.

Weiter wird vorgeschlagen, dass zwischen dem Kupplungsstück und der Gurtwelle eine das Kupplungsstück in eine Lagerstelle des Federgehäuses drängende Axialfeder vorgesehen ist. Das Kupplungsstück ist drehfest mit der Gurtwelle verbunden und führt damit die Drehbewegungen der Gurtwelle mit aus. Durch die vorgeschlagene Lösung wird das Kupplungsstück dabei in seiner Bewegung verbessert gelagert, wobei zur Lagerung bewusst das feststehende Federgehäuse genutzt wird, welches gleichzeitig die Befestigungsstelle für das erste Ende der Rückzugsfeder bildet. Dabei ist die Lagerstelle bevorzugt ein Kalottenlager in Form einer Halb- oder Teilkugel in dem Federgehäuse, welches aufgrund seiner Form sowohl Axial- als auch Radialkräfte bevorzugt richtungsneutral aufnehmen kann.

Weiter wird vorgeschlagen, dass die Axialfeder eine Kegelfeder ist, welche das Kupplungsstück aufgrund seiner Formgebung sowohl in Axial- als auch in Radialrichtung gegenüber der Lagerstelle vorspannt. Dabei kann das Vorspannen des Kupplungsstückes bzw. das Zentrieren des Kupplungsstückes in Radialrichtung besonders einfach verwirklicht werden, indem sich die Kegelfeder mit ihrem größeren Durchmesser an der Gurtwelle abstützt. Dadurch stützt sich die Kegelfeder mit dem kleineren Durchmesser an dem Kupplungsstück ab und bewirkt dadurch gleichzeitig eine Zentrierung des Kupplungsstückes.

Weiter wird vorgeschlagen, dass eine Kraftbegrenzungseinrichtung mit einem mittels einer Blockierklinke gegenüber einem Blockierwandabschnitt des Rahmens blockierbaren Profilkopf vorgesehen ist, und die Wandabschnitte mit den Lageröffnungen an einer Seite des Blockierwandabschnittes angeordnet sind, und das Lagerspiel der Lageröffnung in dem Wandabschnitt mit dem größeren Abstand zu dem Blockierwandabschnitt größer ist als das Lagerspiel der Lageröffnung in dem Wandabschnitt mit dem kleineren Abstand zu dem Blockierwandabschnitt. Durch die vorgeschlagene Weiterentwicklung kann die Lagerung hinsichtlich der wirkenden Lagerkräfte während der Aktivierung der Kraftbegrenzungseinrichtung verbessert werden, indem die Gurtwelle winklig ausgelenkt werden kann und dennoch gleichmäßig in den Lageröffnungen anläuft.

Die Erfindung wird im Folgenden anhand bevorzugter Ausführungsformen unter Bezugnahme auf die beigefügten Figuren erläutert. Dabei zeigt
- Fig. 1: einen Gurtaufroller mit einer Gurtwelle und einer Kraftbegrenzungseinrichtung in einer Schnittdarstellung der Gurtwelle; und
- Fig. 2: eine Explosionsdarstellung des Gurtaufrollers in einer ersten Perspektive; und
- Fig. 3: eine Explosionsdarstellung des Gurtaufrollers in einer zweiten Perspektive; und
- Fig. 4: eine Schnittdarstellung des Gurtaufrollers mit der Gurtwelle und der Federkassette; und
- Fig. 5: einen vergrößerten Ausschnitt der Federkassette im Bereich des Kupplungsstückes; und
- Fig. 6: einen vergrößerten Ausschnitt der Federkassette im Bereich des Kupplungsstückes und der Gurtwelle; und
- Fig. 7: die Federkassette der Figur 4 in Blickrichtung von links auf das Federgehäuse zu erkennen; und
- Fig. 8: die Federkassette 5 der Figur 4 nach der Befestigung an dem Wandabschnitt in Blickrichtung von rechts vor dem Einschieben der Gurtwelle; und
- Fig. 9: einen Gurtaufroller mit einer Lageröffnung mit einem verdickten Wandabschnitt; und
- Fig. 10: einen Gurtaufroller mit einer Federkassette mit einer Abdeckung mit einem radialen ringförmigen Kragen.

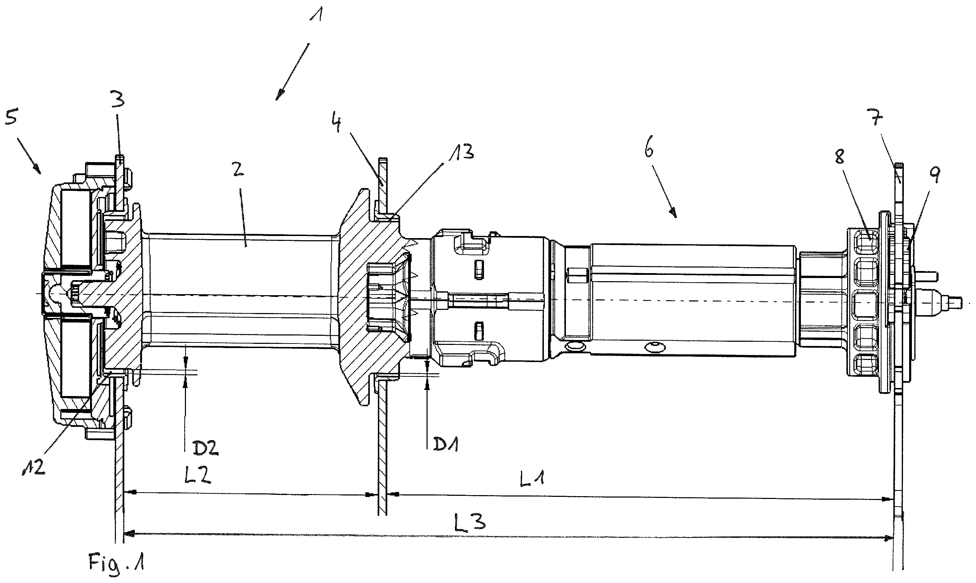

In der Figur 1 ist ein erfindungsgemäßer Gurtaufroller 1 mit einer Gurtwelle 2 und einer Kraftbegrenzungseinrichtung 6 zu erkennen. Die Gurtwelle 2 und die Kraftbegrenzungseinrichtung 6 sind jeweils in parallel zueinander ausgerichteten Wandabschnitten 3 und 4 gelagert. Die Wandabschnitte 3 und 4 sind feststehend ausgebildet und unterteilen den Innenraum eines nicht dargestellten Rahmens, welcher aus einer oder mehreren Profilschienen gebildet ist. Alternativ können die Wandabschnitten 3 und 4 aber auch durch die hochgebogenen Schenkel eines U-förmigen Rahmens gebildet sein. Die Wandabschnitte 3 und 4 sind im befestigten Zustand des Gurtaufrollers 1 im Fahrzeug fahrzeugfest befestigt.

Die Kraftbegrenzungseinrichtung 6 umfasst einen über eine Blockierklinke 9 fahrzeugfest in einem Blockierwandabschnitt 7 blockierbaren Profilkopf 8 und einen oder mehrere nicht zu erkennende Torsionsstäbe, welche mit einem Ende mit dem Profilkopf 8 und mit dem anderen Ende mit der Gurtwelle 2 verbunden oder verbindbar sind und bei blockiertem Profilkopf 8 einen kraftbegrenzten Gurtbandauszug des Sicherheitsgurtes durch eine plastische Verformung und einer dadurch ermöglichten Drehung der Gurtwelle 2 in Auszugsrichtung ermöglichen.

Ferner ist an der linken stirnseitigen Außenseite des Wandabschnittes 3 eine Federkassette 5 befestigt, deren Aufbau nachfolgend noch näher erläutert wird. Die Federkassette 5 wird vormontiert und als Baugruppe an dem Wandabschnitt 3 des Gurtaufrollers 1 befestigt.

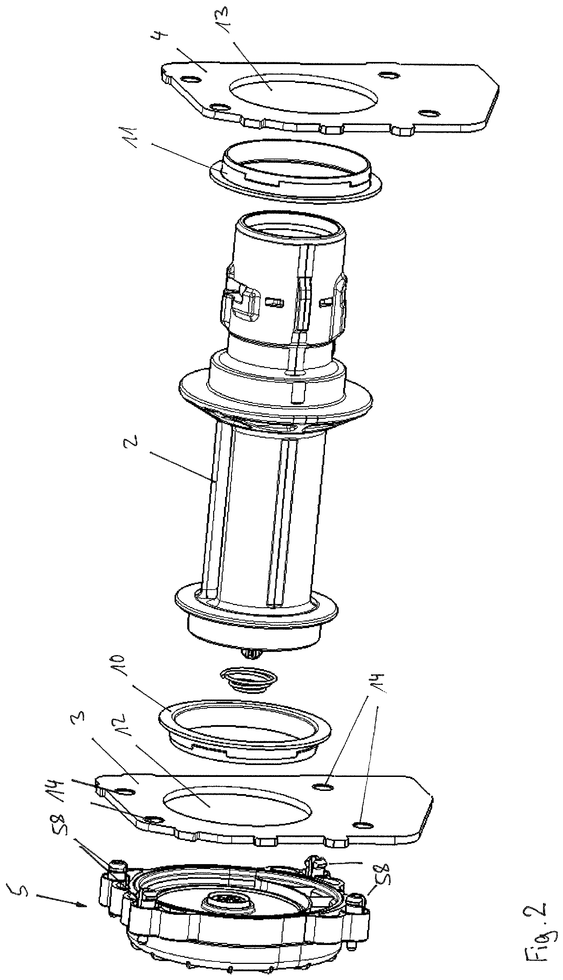

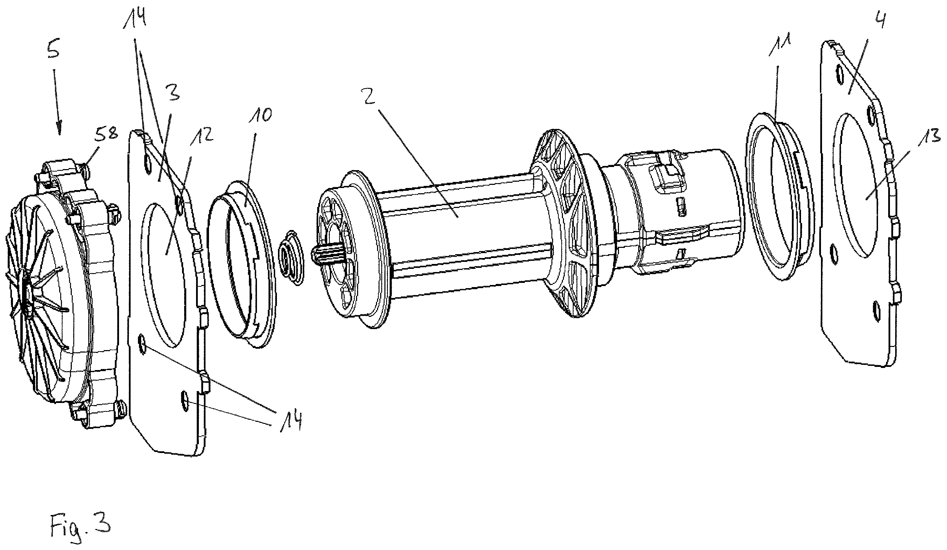

In den Figuren 2 und 3 ist derselbe Gurtaufroller 1 in Explosionsdarstellung aus verschiedenen Perspektiven jedoch ohne die Kraftbegrenzungseinrichtung 6 und den rechten Blockierwandabschnitt 7 der Figur 1 zu erkennen. In jedem der Wandabschnitte 3 und 4 ist jeweils eine Lageröffnung 12 und 13 vorgesehen, in denen jeweils ein Lagerring 10 und 11 angeordnet ist. Durch die Lagerringe 10 und 11 wird die zur Verfügung stehende Lagerfläche für die Gurtwelle 2 in den Lageröffnungen 12 und 13 vergrößert und damit die Lagerung insgesamt verbessert. Ferner sind in den Wandabschnitten 3 und 4 jeweils vier Befestigungsöffnungen 14 vorgesehen, in denen die Federkassette 5 über Befestigungsstifte 58 befestigt wird.

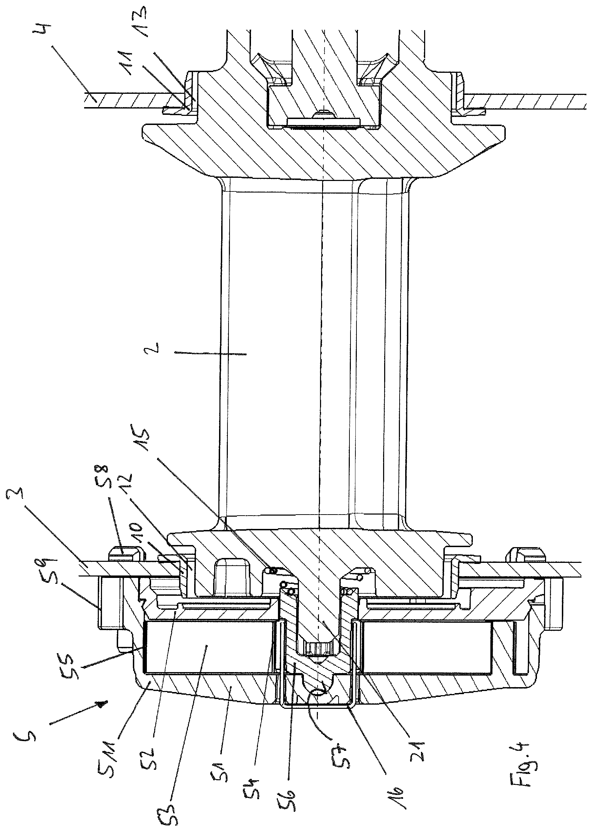

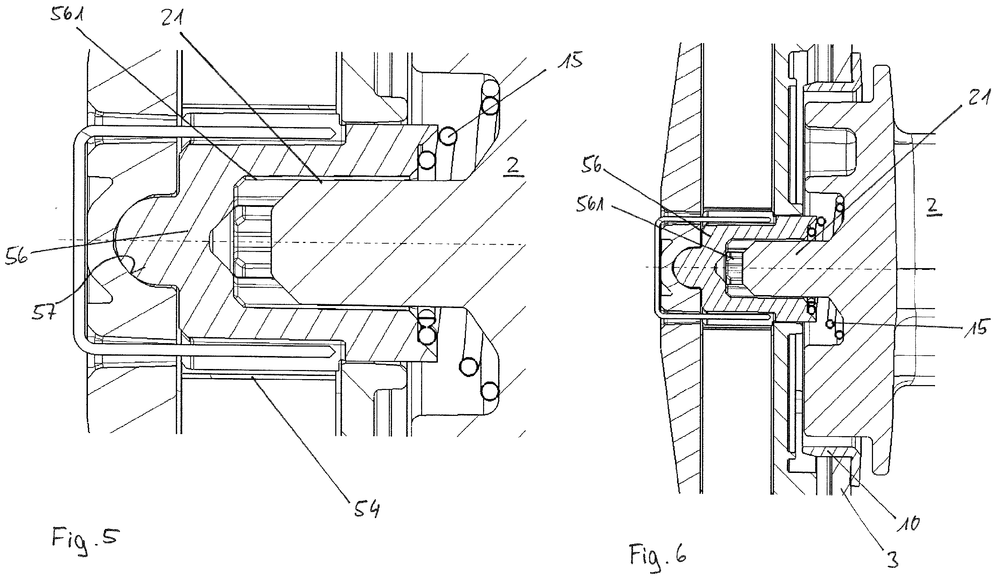

In der Figur 4 sind die Gurtwelle 2 mit der Federkassette 5 und den Wandabschnitten 3 und 4 in Schnittdarstellung zu erkennen. Die Gurtwelle 2 greift durch die Lageröffnungen 12 und 13, in denen die Lagerringe 10 und 11 angeordnet sind. Die Lagerringe 10 und 11 sind als Kunststoffspritzteile ausgebildet und vergrößern die Lagerfläche für die Abschnitte der Gurtwelle 2, welche die Lageröffnungen 12 und 13 durchgreifen. Die Federkassette 5 weist ein einseitig offenes, haubenförmiges Federgehäuse 51 auf, welches an seiner offenen Seite mittels eines scheibenförmigen Abdeckteils 52 verschlossen ist. Das Federgehäuse 51 weist damit einen durch das Abdeckteil 52 abgedeckten Hohlraum auf, in dem eine spiralförmigen Rückzugsfeder 53 angeordnet ist. Die Rückzugsfeder 53 ist mit ihrem ersten radial äußeren Ende 55 mit dem Federgehäuse 51 und mit ihrem zweiten radial inneren Ende 54 drehfest mit einem Kupplungsstück 56 und darüber drehfest mit der Gurtwelle 2 verbunden. Hierzu weist das Kupplungsstück 56 eine in der Figur 5 zu erkennende zentrale Öffnung 561 mit einem Vielzahlprofil auf, in welche die Gurtwelle 2 mit einem entsprechend profilierten Fortsatz 21 zur Verwirklichung einer drehfesten Verbindung eingreift.

Die Federkassette 5 wird mit einer vorgespannten Rückzugsfeder 53 vormontiert, indem das Kupplungsstück 56 zusammen mit dem radial inneren zweiten Ende 54 der Rückzugsfeder 53 gegenüber dem radial äußeren ersten Ende der Rückzugsfeder 53 verdreht und anschließend durch eine Halteklammer 16 in der vorbestimmten und vorgespannten Position gegenüber dem Federgehäuse 51 fixiert wird. Dabei wird das Kupplungsstück 56 in einer derartigen Position fixiert, dass die Federkassette 5 mit dem vorausgerichteten Kupplungsstück 56 und dem darin angeordneten Vielzahnprofil auf das Gegenprofil des Fortsatzes 21 aufgeschoben werden kann und sich dabei in einer derartigen Position befindet, dass die Befestigungsstifte 58 des Federgehäuses 51 zu den Befestigungsöffnungen 14 des Wandabschnittes 3 fluchten und in diese eingeführt werden können. Nach der Montage der Federkassette 5 wird die Halteklammer 16 spätestens nach der Montage des Gurtaufrollers 1 im Fahrzeug entfernt, so dass sich die Rückzugsfeder 53 entspannen kann und dadurch die erforderlichen Rückzugskraft zum Aufwickeln des Sicherheitsgurtes auf die Gurtwelle 2 ausübt.

Ferner ist eine Axialfeder 15 in Form einer Kegelfeder vorgesehen, welche vor der Montage der Federkassette 5 auf den Fortsatz 21 aufgesetzt wird. Die Axialfeder 15 weist eine Kegelform auf und wird mit der Windung des größeren Durchmessers auf den Fortsatz 21 aufgeschoben, so dass sie mit dieser Windung axial an der Gurtwelle 2 anliegt. Beim Aufsetzen der Federkassette 5 gelangt diese mit dem Kupplungsstück 56 axial zur Anlage an der Windung der Axialfeder 15 mit dem kleineren Durchmesser. Die Axialfeder 15 hat aufgrund ihrer Kegelform einen Zentrierungseffekt für sich selbst und für das Kupplungsstück 56 und drängt das Kupplungsstück 56 axial gegen eine kalottenförmige Lagerstelle 57 in dem Federgehäuse 51. Das Kupplungsstück 56 weist an seiner der Lagerstelle 57 zugewandten Seite einen teilkugelförmigen Fortsatz auf, mit dem es in der als Kalottenlager ausgebildeten Lagerstelle 57 flächig zur Anlage gelangt und dadurch sowohl in Axial- als auch in Radialrichtung gelagert ist, wie in den Figuren 5 und 6 zu erkennen ist.

Die Gurtwelle 2 und das Kupplungsstück 56 sind dabei so ausgelegt, dass die Federkassette 5 mit dem Kupplungsstück 56 gegenüber der Gurtwelle 2 mit einer axialen Toleranz von +/- 1 mm montiert werden kann.

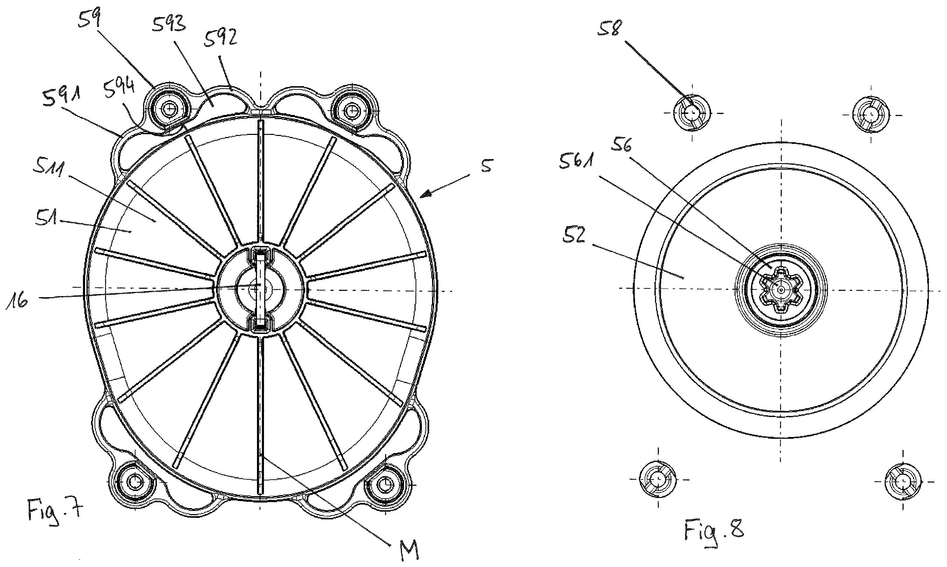

In der Figur 7 ist die Federkassette 5 der Figur 4 in Blickrichtung von links auf das Federgehäuse 51 zu erkennen. In der Figur 8 ist die Federkassette 5 der Figur 4 nach der Befestigung an dem Wandabschnitt 3 in Blickrichtung von rechts vor dem Einschieben der Gurtwelle 2 zu erkennen. Die Federkassette 5 ist mit den Befestigungsstiften 58 in die Befestigungsöffnungen 14 des Wandabschnittes 3 eingesteckt. Die Halteklammer 16 fixiert das Kupplungsstück 56 mit der Öffnung 561 und dem darin vorgesehenen Vielzahnprofil so, dass die Gurtwelle 2 in einer vorbestimmten Ausrichtung mit dem Fortsatz 21 eingeführt werden kann.

Die Festigungsstifte 58 erstrecken sich axial von jeweils einem Befestigungsabschnitt 59, welche über elastische Verformungsabschnitte 591 und 592 mit dem Federgehäuse 51 verbunden sind, so dass sie zusammen mit den Befestigungsabschnitten 59 jeweils einen Freiraum 593 einschließen. Die Verformungsabschnitte 591 und 592 sind als gekrümmte dünnwandige Stege ausgebildet. Ferner sind die Verformungsabschnitte 591 und 592 einstückig mit dem Federgehäuse 51 als Kunststoffspritzteil ausgebildet. Die Verformungsabschnitte 591 und 592 sind aufgrund ihrer Bemessung, Formgebung und ihrer Werkstoffeigenschaften soweit in sich elastisch verformbar, dass das Federgehäuse 51 mit dem daran befestigten ersten Ende 55 der Rückzugsfeder 53 gegenüber den Befestigungsabschnitten 59 geringfügige Radialbewegungen ausführen kann. Dabei sind die Befestigungsabschnitte 59 an ihrer dem Federgehäuse 51 zugewandten Seite jeweils zu einer Anschlagsfläche 594 abgeflacht, so dass die mögliche Radialbewegung des Federgehäuses 51 begrenzt ist. Der Spalt zwischen der Anschlagsfläche 594 und dem Federgehäuse 51 im unbelasteten Zustand also dem Ausgangszustand ohne äußere Lasteinwirkung ist dabei größer als der Spalt zwischen der Gurtwelle 2 und den Lagerringen 10 und 11, so dass die Radialbewegungen der Gurtwelle 2 nicht zu einer Anlage des Federgehäuses 51 an den Anschlagsflächen 594 führen kann und die Gurtwelle 2 bei Radialbewegungen vorher an den Lagerringen 10 und 11 anläuft. Damit kann ausgeschlossen werden, dass die Anschlagsflächen 594 der Befestigungsabschnitte 59 durch die von dem Sicherheitsgurt auf die Gurtwelle 2 ausgeübten Radialkräfte belastet werden. Die Anschlagsflächen 594 werden dadurch ausschließlich dann belastet, wenn das Federgehäuse 51 aufgrund der von der Rückzugsfeder 53 ausgeübten Radialkräfte belastet und ausgelenkt wird.

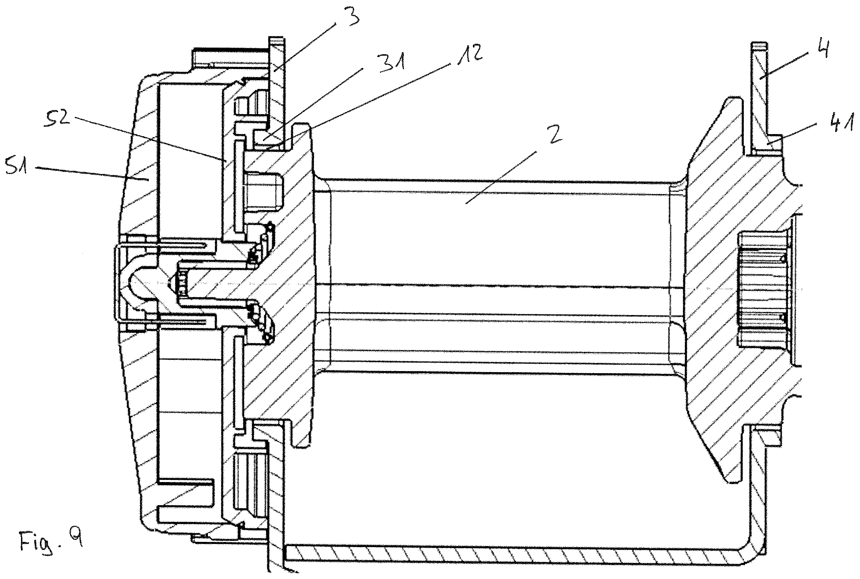

In der Figur 9 ist eine alternative Ausführungsform zu erkennen, bei der keine Lagerringe 10 und 11 vorgesehen sind. Stattdessen sind die Wandabschnitte 3 und 4 durch eine Umformung wie z.B. einem Tiefzieh- oder Stanzvorgang zu in Axialrichtungen verdickten Lagerabschnitten 31 und 41 mit einer entsprechend vergrößerten radialen Lagerfläche verformt.

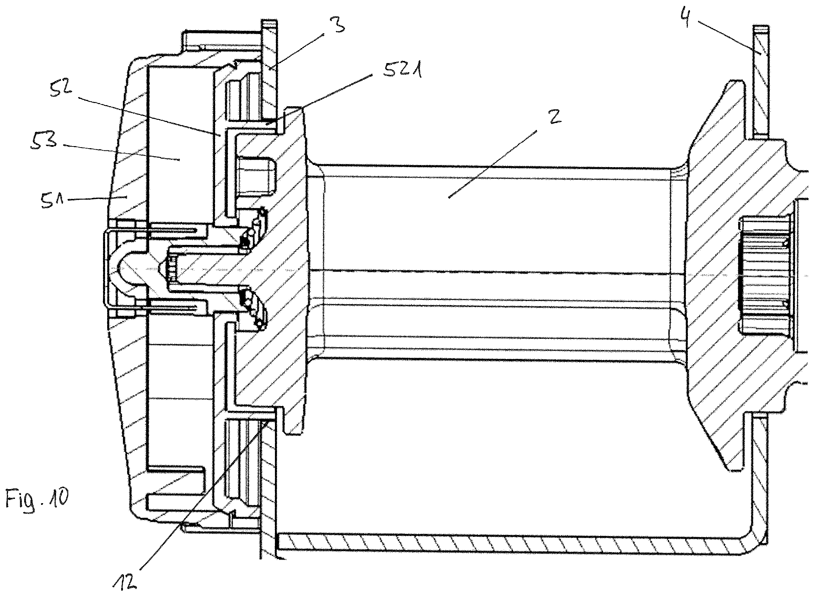

In der Figur 10 ist eine weitere alternative Ausführungsform zu erkennen, bei der ebenfalls keine Lagerringe 10 und 11 vorgesehen sind. Stattdessen weist die Abdeckung 52 der Federkassette 5 einen ringförmigen axial vorstehenden Kragen 521 auf, welcher in die Lageröffnung 12 des linken Wandabschnittes 3 ragt und die Gurtwelle 2 in dem durch die Lageröffnung 12 durchgreifenden Abschnitt umfasst.

Beide Lösungen der Figur 9 und 10 zur Verbesserung der Lagerung der Gurtwelle 2 stellen für sich von der Beweglichkeit des Federgehäuses 51 unabhängige Merkmale dar, welche den Vorteil aufweisen, dass die bisher vorgesehenen Lagerringe 10 und 11 entfallen können.

Die vorgeschlagene Beweglichkeit des Federgehäuses 51 durch die vorgesehenen Verformungsabschnitte 591 und 592 weist den Vorteil auf, dass das Federgehäuse 51 selbst ausweichen und dadurch die von der Rückzugsfeder 53 ausgeübten Radialkräfte kompensieren kann, so dass die dadurch auf die Gurtwelle 2 einwirkenden Radialkräfte zumindest reduziert werden können. Im Idealfall übt die Rückzugsfeder 53 dann allein Umfangskräfte auf die Gurtwelle 2 aus, so dass deren Drehbewegung während des Auf- und Abwickelns wesentlich verbessert werden kann. Dadurch kann der Lauf und die Lagerung der Gurtwelle 2 leichter und insbesondere reibungsärmer verwirklicht werden.

Wie in der Figur 1 zu erkennen ist, sind die Wandabschnitte 3 und 4 auf derselben Seite hier auf der linken Seite des Blockierwandabschnitts 7 angeordnet. Dabei weist der in der Darstellung rechte Wandabschnitt 4 mit der Lageröffnung 13 einen kleineren Abstand L1 und der in der Darstellung linke Wandabschnitt 3 mit der Lageröffnung 12 einen größeren Abstand L3 zu dem Blockierwandabschnitt 7 auf. Der Abstand L2 zwischen den beiden Wandabschnitten 3 und 4 mit den Lageröffnungen 12 und 13 entspricht dann der Differenz zwischen dem größeren Abstand L3 und dem kleineren Abstand L1.

Die Lageröffnung 12 in dem Wandabschnitt 3 mit dem größeren Abstand L3 zu dem Blockierwandabschnitt 7 weist ein größeres Lagerspiel D2, hier von 1,07 mm, auf als die Lageröffnung 13 in dem Wandabschnitt 4 mit dem kleineren Abstand L1 zu dem Blockierwandabschnitt 7 mit dem kleineren Lagerspiel D1, hier von 0,7 mm. Durch die vorgeschlagene Bemessung der Lagerspiele D1 und D2 läuft die Gurtwelle 2 auch bei einer Blockierung des Profilkopfes 8 und einer winkligen Auslenkung der Gurtwelle 2 zu dem Blockierkopf 8 möglichst gleichmäßig in den Lageröffnungen 12 und 13 der Wandabschnitte 3 und 4 an, was wiederum zu einer gleichmäßigeren Belastung der Wandabschnitte 3 und 4 sowie der Gurtwelle 2 im Bereich der Lageröffnungen 12 und 13 führt.

Ferner entspricht das Verhältnis des Abstandes L2 zwischen den Wandabschnitten 3 und 4 zu dem Abstand L1 des rechten Wandabschnittes 4 zu dem Blockierwandabschnitt 7 ungefähr 2:1 oder anders ausgedrückt einem Verhältnis von 2/3 zu 1/3. Entsprechend ist das Verhältnis des Abstandes L1 zwischen dem rechten Wandabschnitt 4 und dem Blockierwandabschnitt 7 zu dem Abstand L3 zwischen dem linken Wandabschnitt 3 und dem Blockierwandabschnitt 7 2:3, welches idealerweise nahezu identisch zu dem Verhältnis des Lagerspiels D1 in der Lageröffnung 13 des rechten Wandabschnittes 4 zu dem Lagerspiel D2 in der Lageröffnung 12 in dem linken Wandabschnitt 3 von 0,7/1,07 ist.

## Patentansprüche

1. Gurtaufroller (1) für eine Sicherheitsgurteinrichtung eines Kraftfahrzeuges mit
- einer drehbar in einem Rahmen gelagerten Gurtwelle (2) zum Aufwickeln eines Sicherheitsgurtes der Sicherheitsgurteinrichtung, wobei
- der Rahmen zwei gegenüberliegende parallel zueinander ausgerichtete Wandabschnitte (3,4) mit jeweils einer Lageröffnung (12,13) aufweist, in denen die Gurtwelle (2) drehbar gelagert ist, und
- einem an einem der Wandabschnitte (3,4) befestigten Federgehäuse (51) mit einer darin angeordneten Rückzugsfeder (53), welche mit einem ersten Ende (55) mit dem Federgehäuse (51) und einem zweiten Ende (54) drehfest mit der Gurtwelle (2) verbunden ist,
**dadurch gekennzeichnet, dass**
- das Federgehäuse (51) radial elastisch an dem Wandabschnitt (3,4) gehalten ist, wobei
- das Federgehäuse (51) ein Grundgehäuse (511) mit radial außen angeordneten Befestigungsabschnitten (59) aufweist, und
- die Befestigungsabschnitte (59) über elastische Verformungsabschnitte (591,592) mit dem Grundgehäuse (511) verbunden sind.

2. Gurtaufroller (1) nach Anspruch 1, **dadurch gekennzeichnet, dass**
- die Befestigungsabschnitte (59) jeweils über zwei Verformungsabschnitte (591,592) mit dem Grundgehäuse (511) verbunden sind, und
- die Befestigungsabschnitte (59) jeweils zusammen mit den daran vorgesehenen Verformungsabschnitten (591,592) jeweils einen Freiraum (593) zu dem Grundgehäuse (511) begrenzen.

3. Gurtaufroller (1) nach einem der Ansprüche 1 oder 2, **dadurch gekennzeichnet, dass**
- vier Befestigungsabschnitte (59) vorgesehen sind, und jeweils zwei Befestigungsabschnitte (59) in Bezug zu einer Mittenachse (M) des Gurtaufrollers (1) symmetrisch zueinander angeordnet sind.

4. Gurtaufroller (1) nach einem der Ansprüche 1 bis 3, **dadurch gekennzeichnet, dass**
- die Befestigungsabschnitte (59) derart angeordnet sind, dass sie jeweils einen Anschlag bilden, durch welchen die durch die Verformungsabschnitte (591,592) ermöglichte radiale Auslenkung des Federgehäuses (51) begrenzt wird.

5. Gurtaufroller (1) nach einem der Ansprüche 1 bis 4, **dadurch gekennzeichnet, dass**
- das Federgehäuse (51) an seiner dem Wandabschnitt (3,4) zugewandten Seite eine mit dem Federgehäuse (51) fest verbundene Abdeckung (52) aufweist, und
- die Abdeckung (52) einen ringförmigen axial vorstehenden Kragen (521) aufweist, welcher derart angeordnet ist, dass er in die Lageröffnungen (12,13) eingreift und den die Lageröffnung (12,13) durchgreifenden Abschnitt der Gurtwelle (2) umfasst.

6. Gurtaufroller (1) nach einem der Ansprüche 1 bis 5, **dadurch gekennzeichnet, dass**
- der Wandabschnitt (3,4) im Bereich der Lageröffnung (12,13) in Axialrichtung der Gurtwelle (2) verdickt ist.

7. Gurtaufroller (1) nach einem der Ansprüche 1 bis 6, **dadurch gekennzeichnet, dass**
- die Rückzugsfeder (53) mit dem zweiten Ende (54) mit einem Kupplungsstück (56) drehfest verbunden ist, welches drehfest mit der Gurtwelle (2) verbunden ist.

8. Gurtaufroller (1) nach Anspruch 7, **dadurch gekennzeichnet, dass**
- zwischen dem Kupplungsstück (56) und der Gurtwelle (2) eine das Kupplungsstück (56) in eine Lagerstelle (57) des Federgehäuses (51) drängende Axialfeder (15) vorgesehen ist.

9. Gurtaufroller (1) nach Anspruch 8, **dadurch gekennzeichnet, dass** die Lagerstelle (57) ein Kalottenlager in Form einer Halb- oder Teilkugel in dem Federgehäuse (51) ist

10. Gurtaufroller (1) nach Anspruch 8 oder 9, **dadurch gekennzeichnet, dass**
- die Axialfeder (15) eine Kegelfeder ist.

11. Gurtaufroller (1) nach Anspruch 10, **dadurch gekennzeichnet, dass**
- die Kegelfeder sich mit ihrem größeren Durchmesser an der Gurtwelle (2) abstützt.

12. Gurtaufroller nach einem der Ansprüche 1 bis 11, **dadurch gekennzeichnet, dass**
- eine Kraftbegrenzungseinrichtung (6) mit einem mittels einer Blockierklinke (9) gegenüber einem Blockierwandabschnitt (7) des Rahmens blockierbaren Profilkopf (8) vorgesehen ist, und
- die Wandabschnitte (3,4) mit den Lageröffnungen (12,13) an einer Seite des Blockierwandabschnittes (7) angeordnet sind, und
- das Lagerspiel (D2) der Lageröffnung (12) in dem Wandabschnitt (3) mit dem größeren Abstand (L3) zu dem Blockierwandabschnitt (7) größer ist als das Lagerspiel (D1) der Lageröffnung (13) in dem Wandabschnitt (4) mit dem kleineren Abstand (L1) zu dem Blockierwandabschnitt (7).

## Claims

1. Belt retractor (1) for a seat belt device of a motor vehicle, comprising
- a belt shaft (2), rotatably mounted in a frame, for winding up a seatbelt of the seatbelt device, wherein
- the frame has two opposing wall portions (3,4) oriented in parallel with one another and each comprising a bearing opening (12,13) in which the belt shaft (2) is rotatably mounted, and
- a spring housing (51) fastened to one of the wall portions (3,4) and having a return spring (53) arranged therein, which is connected by a first end (55) to the spring housing (51) and connected by a second end (54) to the belt shaft (2) for conjoint rotation,
**characterized in that**
- the spring housing (51) is radially resiliently held on the wall portion (3,4),
- the spring housing (51) comprising a main housing (511) that has fastening portions (59) arranged radially on the outside, and
- the fastening portions (59) being connected to the main housing (511) via resilient deformation portions (591,592).

2. Belt retractor (1) according to claim 1, **characterized in that**
- the fastening portions (59) are each connected to the main housing (511) via two deformation portions (591,592), and
- the fastening portions (59), together with the deformation portions (591,592) provided thereon, each delimit a free space (593) with respect to the main housing (511).

3. Belt retractor (1) according to any of claims 1 or 2, **characterized in that**
- four fastening portions (59) are provided, and in each case two fastening portions (59) are arranged symmetrically to one another in relation to a central axis (M) of the belt retractor (1).

4. Belt retractor (1) according to any of claims 1 to 3, **characterized in that**
- the fastening portions (59) are arranged in such a way that they each form a stop that limits the radial deflection of the spring housing (51) made possible by the deformation portions (591,592).

5. Belt retractor (1) according to any of claims 1 to 4, **characterized in that**
- the spring housing (51) comprises a cover (52) which is rigidly connected to the spring housing (51) on the side of the spring housing that faces the wall portion (3,4), and
- the cover (52) comprises an annular, axially projecting collar (521) which is arranged in such a way that it engages in the bearing openings (12,13) and encompasses the portion of the belt shaft (2) that passes through the bearing opening (12,13).

6. Belt retractor (1) according to any of claims 1 to 5, **characterized in that**
- the wall portion (3,4) in the region of the bearing opening (12,13) is thickened in the axial direction of the belt shaft (2).

7. Belt retractor (1) according to any of claims 1 to 6, **characterized in that**
- the return spring (53) is connected by the second end (54) to a coupling piece (56) for conjoint rotation, which coupling piece is connected to the belt shaft (2) for conjoint rotation.

8. Belt retractor (1) according to claim 7, **characterized in that**
- an axial spring (15) which urges the coupling piece (56) into a bearing (57) of the spring housing (51) is provided between the coupling piece (56) and the belt shaft (2).

9. Belt retractor (1) according to claim 8, **characterized in that** the bearing (57) is a spherical bearing in the form of a hemisphere or partial sphere in the spring housing (51).

10. Belt retractor (1) according to claim 8 or claim 9, **characterized in that**
- the axial spring (15) is a conical spring.

11. Belt retractor (1) according to claim 10, **characterized in that**
- the larger diameter of the conical spring is supported on the belt shaft (2).

12. Belt retractor according to any of claims 1 to 11, **characterized in that**
- a force limiting device (6) is provided which has a profile head (8) that can be blocked with respect to a blocking wall portion (7) of the frame by means of a blocking pawl (9), and
- the wall portions (3,4) having the bearing openings (12,13) are arranged on one side of the blocking wall portion (7), and
- the bearing clearance (D2) of the bearing opening (12) in the wall portion (3) at the greater distance (L3) from the blocking wall portion (7) is greater than the bearing clearance (D1) of the bearing opening (13) in the wall portion (4) at the smaller distance (L1) from the blocking wall portion (7).

## Revendications

1. Enrouleur de ceinture (1) pour un dispositif à ceinture de sécurité d'un véhicule automobile comportant
- un arbre de ceinture (2) monté de manière à pouvoir tourner dans un cadre pour l'enroulement d'une ceinture de sécurité du dispositif à ceinture de sécurité, dans lequel
- le cadre présente deux sections formant parois (3, 4) opposées et orientées parallèlement l'une à l'autre et comportant respectivement une ouverture de palier (12, 13) dans laquelle l'arbre de ceinture (2) est monté de manière à pouvoir tourner, et
- un boîtier pour ressort (51) fixé sur l'une des sections formant parois (3, 4) et comportant un ressort de rappel (53) disposé dans celui-ci, lequel ressort de rappel est relié par une première extrémité (55) au boîtier pour ressort (51) et par une seconde extrémité (54) à l'arbre de ceinture (2) de manière solidaire en rotation, **caractérisé en ce que**
- le boîtier pour ressort (51) est maintenu radialement de manière élastique sur la section formant paroi (3, 4), dans lequel
- le boîtier pour ressort (51) présente un boîtier de base (511) comportant des sections de fixation (59) disposées radialement à l'extérieur, et
- les sections de fixation (59) sont reliées au boîtier de base (511) par l'intermédiaire de sections de déformation (591, 592) élastiques.

2. Enrouleur de ceinture (1) selon la revendication 1, **caractérisé en ce que**
- les sections de fixation (59) sont reliées au boîtier de base (511) respectivement par l'intermédiaire de deux sections de déformation (591, 592), et
- les sections de fixation (59) délimitent respectivement, conjointement avec les sections de déformation (591, 592) prévues sur celles-ci, respectivement un espace libre (593) par rapport au boîtier de base (511).

3. Enrouleur de ceinture (1) selon l'une des revendications 1 ou 2,
**caractérisé en ce que**
- quatre sections de fixation (59) sont prévues, et respectivement deux sections de fixation (59) sont disposées symétriquement l'une par rapport à l'autre par rapport à un axe central (M) de l'enrouleur de ceinture (1).

4. Enrouleur de ceinture (1) selon l'une des revendications 1 à 3,
**caractérisé en ce que**
- les sections de fixation (59) sont disposées de telle sorte qu'elles forment respectivement une butée au moyen de laquelle la déviation radiale du boîtier pour ressort (51) permise par les sections de déformation (591, 592) est limitée.

5. Enrouleur de ceinture(1) selon l'une des revendications 1 à 4,
**caractérisé en ce que**
- le boîtier pour ressort (51) présente, sur son côté tourné vers la section formant paroi (3, 4), un moyen de recouvrement (52) relié de manière fixe au boîtier pour ressort (51), et
- le moyen de recouvrement (52) présente une collerette annulaire (521) faisant saillie axialement qui est disposée de telle sorte qu'elle vient en prise dans les ouvertures de palier (12, 13) et entoure la section de l'arbre de ceinture (2) traversant l'ouverture de palier (12, 13).

6. Enrouleur de ceinture (1) selon l'une des revendications 1 à 5,
**caractérisé en ce que**
- la section formant paroi (3, 4) est épaissie dans la zone de l'ouverture de palier (12, 13) dans la direction axiale de l'arbre de ceinture (2).

7. Enrouleur de ceinture (1) selon l'une des revendications 1 à 6,
**caractérisé en ce que**
- le ressort de rappel (53) est relié de manière solidaire en rotation, par la seconde extrémité (54), à une pièce d'accouplement (56) qui est reliée de manière solidaire en rotation à l'arbre de ceinture (2).

8. Enrouleur de ceinture (1) selon la revendication 7, **caractérisé en ce que**
- entre la pièce d'accouplement (56) et l'arbre de ceinture (2) est prévu un ressort axial (15) poussant la pièce d'accouplement (56) en un point d'appui (57) du boîtier pour ressort (51).

9. Enrouleur de ceinture (1) selon la revendication 8, **caractérisé en ce que** le point d'appui (57) est un appui en calotte sous forme d'une demi-sphère ou d'une sphère partielle dans le boîtier pour ressort (51)

10. Enrouleur de ceinture (1) selon la revendication 8 ou 9,
**caractérisé en ce que**
- le ressort axial (15) est un ressort conique.

11. Enrouleur de ceinture (1) selon la revendication 10, **caractérisé en ce que**
- le ressort conique s'appuie avec son plus grand diamètre contre l'arbre de ceinture (2).

12. Enrouleur de ceinture selon l'une des revendications 1 à 11,
**caractérisé en ce que**
- un dispositif de limitation de force (6) est prévu avec une tête profilée (8) pouvant être bloquée au moyen d'un cliquet de blocage (9) par rapport à une section formant paroi de blocage (7) du cadre, et
- les sections formant parois (3, 4) sont disposées avec les ouvertures de palier (12, 13) sur un côté de la section formant paroi de blocage (7), et
- le jeu de palier (D2) de l'ouverture de palier (12) dans la section formant paroi (3) ayant la plus grande distance (L3) par rapport à la section formant paroi de blocage (7) est plus grand que le jeu de palier (D1) de l'ouverture de palier (13) dans la section formant paroi (4) ayant la plus petite distance (L1) par rapport à la section formant paroi de blocage (7).
